Europäisches Patentamt

European Patent Office

Office européen des brevets

(19)

(11) Veröffentlichungsnummer: **0 007 621**
**B1**

(12) **EUROPÄISCHE PATENTSCHRIFT**

(45) Veröffentlichungstag der Patentschrift:
27.04.83

(51) Int. Cl.³: **G 01 N 27/12**

(21) Anmeldenummer: 79102627.1

(22) Anmeldetag: 24.07.79

(54) Sauerstoffsensor.

(30) Priorität: 26.07.78 JP 91203/78

(43) Veröffentlichungstag der Anmeldung:
06.02.80 Patentblatt 80/3

(45) Bekanntmachung des Hinweises auf die Patenterteilung:
27.04.83 Patentblatt 83/17

(84) Benannte Vertragsstaaten:
AT BE CH DE FR GB IT LU NL SE

(56) Entgegenhaltungen:
DE-A-2 608 487
US-A-3 479 257
US-A-3 699 803
US-A-3 831 432
US-A-3 886 785
US-A-4 001 757

(73) Patentinhaber: FUJI ELECTRIC CO. LTD., 1-1,
Tanabeshinden, Kawasaki-ku, Kawasaki 210 (JP)

(72) Erfinder: Taniguchi, Harutaka, 2-2-1 Nagasaka,
Yokosuka-shi Kanagawa (JP)
Erfinder: Hara, Kenichi, Dipl.-Ing, 379 Nagasaka,
Yokosuka-shi Kanagawa (JP)
Erfinder: Shiraisch, Hideo, Dipl.-Ing.,
2423-7 Shimonagaya Kounan-ku, Yokohama-shi
Kanagawa (JP)

(74) Vertreter: Mehl, Ernst, Dipl.-Ing. et al, Postfach 22 01 76,
D-8000 München 22 (DE)

ACTORUM AG

Sauerstoffsensor

Die Erfindung betrifft einen Sauerstoffsensor zur Bestimmung der Änderung des Sauerstoffpartialdruckes in einem den Sensor umgebenden Gas aufgrund einer Änderung des Widerstandes eines Übergangsmetalloxides mit einem Messelement aus dem Übergangsmetalloxid und zwei mit dem Messelement in Berührung stehenden Metallelektroden, wobei das Übergangsmetalloxid und die Metallelektrodenn auf einem keramischen Substrat angeordnet sind und auf dem Übergangsmetalloxid und den Metallelektroden eine keramische Schutzschicht in der Weise angeordnet ist, dass die freie Oberfläche des Messelementes vollständig und die freie Oberfläche der Metallelektroden wenigstens teilweise bedeckt ist.

Sauerstoffsensoren der genannten Art dienen insbesondere zur Bestimmung des Sauerstoffgehaltes in Abgasen, beispielsweise von Kraftfahrzeugen, und damit zur Überwachung bzw. Begrenzung der Umweltverschmutzung.

Die Technik der 3-Weg-Katalysatoren zur Verhinderung der durch Kraftfahrzeuge verursachten Umweltverschmutzung erfordert ein Luft/Brennstoff-Verhältnis innerhalb eines vorgegebenen Bereiches nahe am Äquivalenzpunkt, d.h. nahe dem stöchiometrischen Verhältnis. Deshalb wird dabei ein Sauerstoffsensor zur Bestimmung des Sauerstoffes im Verbrennungsabgas vorgesehen und das Messergebnis zum Brennstoffeinspritzsystem zurückgeführt.

Es ist auch bekannt, in Sauerstoffsensoren Übergangsmetalloxide einzusetzen, um eine Änderung des Partialdruckes des Sauerstoffs in dem umgebenden Gas mittels einer Änderung des elektrischen Wiederstandes zu bestimmen. So ist aus der DE-A-2 608 487 ein Gasdetektor bekannt, der zur Bestimmung von Gaskomponenten, wie Sauerstoff, Kohlenmonoxid und Kohlenwasserstoffen, im Gas von Brennkraftmaschinen und zur Ermittlung des Luft/Brennstoff-Verhältnisses des einer Brennkraftmaschine zugeführten Luft/Brennstoff-Gemisches dient. Dieser Gasdetektor weist dazu folgende Bestandteile auf:

a) ein mit dem Abgas in Berührung stehendes Messelement aus einem halbleitenden Metalloxid, dessen elektrischer Widerstand von den im Abgas enthaltenen Gaskomponenten abhängig ist;

b) zwei Elektroden, welche – im Abstand voneinander – an der dem Abgas ausgesetzten Oberfläche des Messelementes oder nahe dieser Oberfläche im Inneren des Messelementes angeordnet sind;

c) eine für das Abgas durchlässige poröse Überzugsschicht aus einem elektrisch isolierenden Metalloxid, welche die dem Abgas ausgesetzte Oberfläche des Messelementes abdeckt; und

d) einen Katalysator zur Förderung der Oxidation von Bestandteilen des Abgases, welcher im allgemeinen von der Überzugsschicht getragen wird.

Beim bekannten Gasdetektor liegt das Messelement in Form einer Dünnschicht mit einer Dicke von 0,01 bis 10 µm, vorzugsweise 0,03 bis 5 µm, vor. Als Material für das Messelement werden Überzugsmetalloxide, wie $TiO_2$, NiO, CoO, MnO, ZnO und CuO, oder Metalloxide von Hauptgruppenelementen, wie $SnO_2$, eingesetzt. Die Elektroden, die ebenfalls als Dünnschichten ausgebildet sind, können aus einem Metall mit guter Hitze- und Korrosionsbeständigkeit, wie Gold oder Platin, bestehen. Das Messelement ist auf einem elektrisch isolierenden Halteteil, beispielsweise aus keramischem Material, angeordnet und wird von der Überzugsschicht vollständig bedeckt. Die Überzugs- bzw. Isolierschicht besteht dabei aus einem wärmebeständigen, porösen Metalloxid, wie $\gamma$-$Al_2O_3$, $ZrO_2$ oder MgO, d.h. aus keramischem Material. Diese Überzugsschicht kann auch die beiden Elektroden bedecken.

Aus der US-A-3886785 ist ein Sensor zur Bestimmung des Partialdruckes von Sauerstoff bekannt. Dieser Sensor umfasst einen porösen gesinterten keramischen Körper aus einem Überzugsmetalloxid, wie $TiO_2$, und ein Paar mit Abstand voneinander angeordneten Elektroden. Das keramische Material muss dabei eine bestimmte Dichte und einen bestimmten Bruchmodul aufweisen. Bei diesem Sensor ist der Übergangsmetalloxid-Körper, d.h. das Messelement, relativ dick; der Körper besteht nämlich aus drei Platten, von denen jede eine Dicke von 200 µm aufweist.

Übergangsmetalloxid-Sensorelemente werden in der Weise hergestellt, dass zunächst Grünlinge aus dem pulverförmigen Oxid und einem organischen Bindemittel nach dem «doctor blade»-Verfahren gefertigt werden, dass dazwischen Metallelektroden angeordnet werden und dass anschliessend gebrannt wird. Von Nachteil ist dabei jedoch, dass es einem derartigen Produkt an mechanischer Festigkeit mangelt, so dass es einen keramischen oder metallischen Träger erfordert, in dem das Sensorelement für den praktischen Gebrauch angeordnet wird. Ein anderer Nachteil ist, dass Sauerstoffsensoren, bei denen die Widerstandsänderung eines Übergangsmetalloxides ausgenutzt wird, bislang ein ungünstigeres Ansprechverhalten aufweisen als andere bekannte Sauerstoffsensoren, beispielsweise solche mit Zirkonoxid, bei denen eine Veränderung der elektromotorischen Kraft ausgenutzt wird.

Aufgabe der Erfindung ist es, einen – ein Messelement mit einem auf einem keramischen Substrat angeordneten Übergangsmetalloxid aufweisenden – Sauerstoffsensor der eingangs genannten Art in der Weise auszugestalten, dass er sowohl eine ausreichende mechanische Festigkeit als auch ein gutes Ansprechverhalten besitzt.

Dies wird erfindungsgemäss dadurch erreicht, dass das Messelement aus einem porösen Dickfilm des Übergangsmetalloxides mit einer Dicke zwischen etwa 50 und 100 µm besteht, an dem zwei Dickfilm-Metallelektroden angeordnet sind, dass eine der beiden Metallelektroden eine auf dem keramischen Substrat angeordnete erste Schicht eines Elektrodendickfilmes und eine auf der ersten Schicht und dem Übergangsmetalloxid-Dickfilm angeordnete zweite Schicht umfasst und dass die zweite Schicht des Elektrodendickfilmes sowohl die Oberfläche des Übergangsmetalloxid-Dickfilmes als auch die Oberfläche der ersten Schicht des Elektrodendickfilmes wenigstens teilweise bedeckt.

Die Erfindung geht von folgenden Überlegungen aus. Von einem Sauerstoffsensor wird verlangt, dass er schnell auf eine Veränderung des Sauerstoffpartialdruckes im Abgas des Motors eines Kraftfahrzeuges oder desgleichen anspricht. Der Sauerstoffsensor soll eine Ansprechzeit haben, die wenigstens so kurz oder kürzer ist als die Zeit, die durch die Verbrennung im Motor und durch die Laufzeit des Abgases zwischen Motor und Sensor bedingt ist. Um eine derart kurze Ansprechzeit zu erreichen, ist ein ausreichender und wirksamer Kontakt des Abgases mit dem Übergangsmetalloxid erforderlich. Abweichungen im elektrischen Widerstand des Übergangsmetalloxides werden von Abweichungen in der stöchiometrischen Zusammensetzung des kristallinen Oxides verursacht. Die Abweichungen in der Stöchiometrie werden beim Kontakt des Oxides mit dem im Abgas enthaltenen Sauerstoff bewirkt. Deshalb ist ein ausreichender und wirksamer Kontakt erforderlich. Die Ansprechcharakteristik der Veränderung des elektrischen Widerstandes ist also das tatsächliche Ansprechverhalten des Sauerstoffsensors. Die Geschwindigkeit, mit der das Gas in das kristalline Oxid diffundiert, bestimmt die Ansprechgeschwindigkeit der Veränderung in der Stöchiometrie und damit die Ansprechgeschwindigkeit der Widerstandsänderung des kristallinen Oxids. Um eine schnelle Diffusion des Abgases in das kristalline Oxid zu erreichen, ist deshalb beim erfindungsgemässen Sauerstoffsensor das Übergangsmetalloxidelement porös. Das oxidische Element dieses Sauerstoffsensors ist ferner dünn, um einen kurzen Diffusionsweg des Abgases zu ermöglichen.

Beim Einsatz in Kraftfahrzeugen oder dergleichen ist der Sauerstoffsensor mechanischen Belastungen aufgrund von Vibratoren des Motors und schnellen Temperaturwechseln oder cyclischen Beanspruchungen aufgrund von Start- und Haltevorgängen, Beschleunigung und Drehzahlverminderung der Maschine ausgesetzt. Die mechanische Beanspruchung des Sauerstoffsensors ist dabei der Masse des Sensors proportional. Der erfindungsgemässe Sauerstoffsensor weist deshalb das oxidische Element in Form eines Dickfilmes auf, um die Masse zu reduzieren. Damit ergibt sich eine Verminderung des Einflusses der mechanischen Schwingungen. Bei einer geringen Dicke des oxidischen Elementes wird darüber hinaus auch die thermische Verformung vermindert und dies kann zu einer zusätzlichen Erhöhung der Widerstandsfähigkeit gegen Absplittern führen.

Beim erfindungsgemässen Sauerstoffsensor sind der Übergangsmetalloxid-Dickfilm und die Dickfilm-Metallelektroden vorzugsweise durch Sintern im Anschluss an einen Siebdruckprozess von Pasten pulverförmiger Materialien hergestellt; vorteilhaft sind dabei die zweite Schicht des Elektrodendickfilmes und der Übergangsmetalloxid-Dickfilm zusammen gesintert. Die keramische Schutzschicht ist vorzugsweise durch Aufsprühen von geschmolzenem Material hergestellt. Für die einzelnen Bauteile sind ferner folgende Materialien bevorzugt: Titandioxid als Übergangsmetalloxid, Platin als Elektrodenmetall und Magnesiumspinell für die keramische Schutzschicht. Das keramische Substrat, das im allgemeinen aus Aluminiumoxid besteht, weist vorteilhaft die Form einer zylindrischen Stange auf.

Anhand von Ausführungsbeispielen und Figuren soll die Erfindung noch näher erläutert werden.

Fig. 1 zeigt eine Schnittansicht einer Ausführungsform des erfindungsgemässen Sauerstoffsensors.

Fig. 2 zeigt eine Schnittansicht einer Ausführungsform des erfindungsgemässen Sauerstoffsensors mit einem zylindrischen stangenförmigen Substrat.

Fig. 3 zeigt eine beispielhafte Ausführungsform des erfindungsgemässen Sauerstoffsensors für den praktischen Einsatz.

Fig. 4 zeigt eine Schnittansicht einer beispielhaften Ausführungsform des Sauerstoffsensors nach Fig. 2 für den praktischen Einsatz.

In Fig. 5 ist beispielhaft die Widerstandscharakteristik des erfindungsgemässen Sauerstoffsensors dargestellt, wobei auf der Ordinate der elektrische Widerstand in kΩ und auf der Abszisse das Luft/Brennstoff-Verhältnis aufgetragen ist.

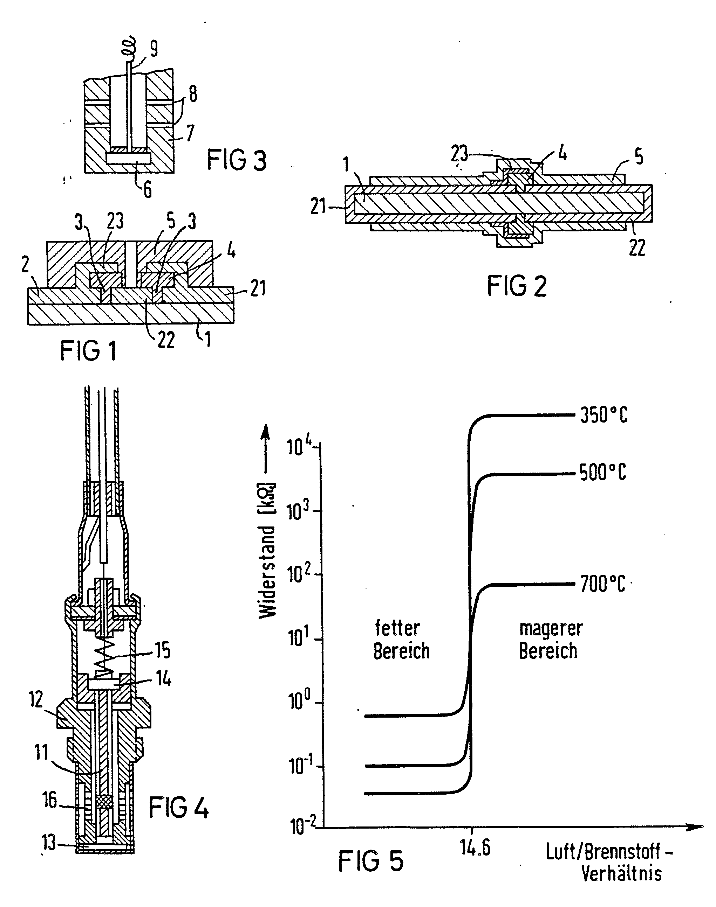

Die Ausführungsform des erfindungsgemässen Sauerstoffsensors nach Fig. 1 enthält eine Scheibe 1 aus 95%igem Aluminiumoxid, die erforderlichenfalls sandgestrahlt ist, um eine Oberflächenrauhigkeit von etwa 3 bis 4 aufzuweisen. Nach der Entfettung durch Ultraschallreinigung werden auf die Scheibe ein Paar Platinelektroden 2 aufgebracht. Die Platinelektroden 2 bestehen aus konzentrischen Elektrodenelementen 21 und 22, die mit einem Zwischenraum 3 von etwa 100 μm zueinander angeordnet sind.

Die Herstellung der Elektrodenelemente erfolgt durch Drucken einer Platinpaste mit einem bestimmten Raster mit Hilfe einer Siebdruckmaschine, die ein Netz aus rostfreiem Stahl (325 mesh oder mehr) besitzt. Nach dem Drucken wird die Scheibe etwa eine Stunde lang auf einer Temperatur von 200°C gehalten, um das Lösungsmittel auszutreiben und das Bindemittel thermisch zu härten. Anschliessend wird die Scheibe für zwei Stunden auf einer Temperatur von 500°C gehalten, um das Bindemittel vollständig zu verbrennen, und danach wird das Material bei gleichmässigem Temperaturanstieg auf einen Wert von 1300°C gesintert. Nach dem Sintern ist der Platinfilm porös und weist eine Dicke von etwa 8 μm auf.

Zur Herstellung des Übergangsmetalloxidfilmes 4 wird beispielsweise Titandioxid verwendet. Ähnlich der Platinpaste wird eine Titandioxidpaste hergestellt. Diese Paste weist beispielsweise folgende Zusammensetzung auf: Titandioxid 60 Gew.-%, Bindemittel (Alkyd-Melamin-Harz) 20 Gew.-%, Lösungsmittel (Diäthylenglykolmono-äthyläther) 20 Gew.-%. Erforderlichenfalls wird dem Titandioxid ein Dotiermittel zugesetzt. Nach dem Mischen der Bestandteile wird mittels Ultraschall eine gleichmässige Dispersion hergestellt. Zusammen mit dem Bindemittel kann eine kleine Menge Nitrocellulose zugesetzt werden, um eine ausreichende Viskosität zu erzielen. Nachdem durch Rotation für eine ausreichende Dispergierung gesorgt ist, wird das Material in einer Breite von 400 bs 500 μm mittels einer Siebdruckmaschine, die ein Netz aus rostfreiem Stahl von 325 mesh und einer Dicke von 60 μm aufweist, gedruckt.

Die Titandioxidpaste neigt zur Blasenbildung und deshalb wird der Druckvorgang vorzugsweise in mehreren Stufen durchgeführt, wobei zwischendurch getrocknet wird. Je weniger Material bei jeder Stufe aufgebracht wird, desto besser ist die entschäumende Wirkung und desto gleichmässiger die Dicke des Produktes. Wenn im Titandioxid-Dickfilm Blasen verbleiben, können diese einen elektrischen Kurzschluss verursachen. Die Schichtdicke pro Arbeitsgang beträgt vorzugsweise etwa 15 μm und dies ermöglicht eine ausreichende Entfernung der Blasen sowie eine schnelle Trocknung bei gleichzeitiger gleichmässiger Schichtdicke. Anwendbar sind Zwischenphasen von 30 Minuten Dauer und Trockenzeiten von einer Stunde bei 200°C. Die Zahl der Druckschritte richtet sich nach der gewünschten Enddicke des Films. Wie bereits erwähnt, ist es wünschenswert, dass die Dicke des oxidischen Dickfilms gering ist. Eine aussergewöhnlich geringe Dicke des Films kann jedoch zu einer übermässigen Sinterung führen, so dass es dem Material an ausreichender Porosität mangelt, was wiederum zu einer Verminderung der gewünschten Verteilung des Abgases in diesem Material führt. Eine Dicke von etwa 50 bis 100 μm wird deshalb bevorzugt und ist auch für die praktische Anwendung geeignet. Eine Dicke unterhalb ca. 200 μm ist bei der bekannten Grünling-Technik nicht anwendbar. Im Vergleich dazu kann erfindungsgemäss eine beträchtlich geringere Dicke erzielt werden.

Nachfolgend wird – ähnlich wie bei den Platinelektroden – das Bindemittel gebrannt, und dann wird bei einer Temperatur etwa zwischen 1100 und 1300°C gesintert. Der auf diese Weise erhaltene Titandioxid-Dickfilm ist ausreichend porös, weist eine Dichte von ca. 70 bis 80% von derjenigen des bisher verwendeten Materials auf und hat eine verhältnismässig geringe Dicke. Infolgedessen kann ein schneller Austausch der damit in Berührung kommenden Gase und ein schnelles Ansprechverhalten erreicht werden.

Auf den Elektroden 2 und dem Metalloxidfilm 4 befindet sich eine Schutzschicht 5. Die Schicht 5 wird mittels Plasmasprühen aus Magnesiumspinell hergestellt. Dazu wird der Scheibenkörper mit den Elektroden und dem Oxidfilm auf eine Drehscheibe gesetzt, vorerhitzt und dann mit geschmolzenen Spinelltropfen besprüht. Die Schicht 5 ist etwa 50 bis 100 μm dick und porös. Da der Platin-Dickfilm 2 ebenfalls porös ist, wird eine gute Verbindung zwischen diesem Film 2 und der Schicht 5 erhalten. Der Zusammenhalt zwischen diesen beiden Schichten ist grösser als derjenige zwischen der Schicht 5 und dem Titandioxidfilm 4. In bezug auf die mechanische Festigkeit ist es deshalb wünschenswert, dass de Berührungsfläche zwischen dem Titandioxidfilm 4 und dem Platin-Dickfilm 2 ziemlich klein ist, während die Berührungsfläche zwischen der Schicht 5 und dem Platin-Dickfilm 2 möglichst gross ist.

Wenn die als Substrat dienende Aluminiumoxidscheibe 1 keine ausreichende Festigkeit besitzt, kann sie während des Plasmasprühens brechen. Es ist deshalb erforderlich, eine ausreichend gesinterte Aluminiumoxidscheibe zu verwenden. Die Schutzschicht 5 dient dazu, den Platinfilm 2 und den Titandioxidfilm 4 gegen Erosion durch das Abgas zu schützen. Da Spinell nur die Hälfte der Wärmeleitfähigkeit von Aluminiumoxid besitzt, dient die Schutzschicht 5 ferner als wärmeisolierendes Schutzglied zur Verminderung einer thermischen Verformung des Titandioxids aufgrund von durch das Abgas verursachten schnellen Temperaturänderungen.

Beim erfindungsgemässen Sensor steht der zwischen den Elektroden 21 und 22 angeordnete, auf dem scheibenförmigen Aluminiumoxidsubstrat 1 befindliche Titandioxidfilm 4 mit den Elektroden nicht nur in seitlicher Richtung, sondern auch in der senkrechten Richtung und quer dazu in Berührung. Ein derartiger Mehrfachkontakt kann im grossen und ganzen zur elektrischen Verbindung dienen, so dass der Gesamtwiderstand des Sensorelementes wesentlich reduziert werden kann.

Bei der Ausführungsform nach Fig. 1 befinden sich die Platinelektroden-Filme 21 und 22 als eine erste Schicht auf dem scheibenförmigen Substrat 1, als Titandioxidfilm 4 liegt als eine zweite Schicht auf der ersten Schicht und eine dritte Schicht 23 der Platinelektrode wiederum ist auf die zweite und die erste Schicht aufgebracht. Die zweite und die dritte Schicht werden bevorzugt zusammen gesintert, da, wenn die Platinpaste auf die zweite Schicht nach deren Sinterung aufgebracht wird, die Paste in den porösen Titandioxid-Dickfilm 4 eindringen und dort die Möglichkeit zum Kurzschluss schaffen kann. Für die gleichzeitige Sinterung ist ein Trockenprozess der zweiten Schicht wichtig, da eine ungenügende Trocknung dieser Schicht auch ein Eindringen der Platinpaste der dritten Schicht in den Titandioxid-Pastenfilm der zweiten Schicht verursachen kann. Ein Trockenvorgang bei 200°C für die Dauer von einer Stunde reicht aus, um ein in der Paste enthaltenes Harz thermisch zu härten, so dass weder eine Reaktion mit dem Lösungsmittel noch eine darauffolgende Auflösung stattfindet; ein derartiger Trockenvorgang reicht auch aus, um ein Eindringen der Platinpaste vollständig auszuschliessen. Nach dem stufenweise erfolgenden Aufbringen und dem Trocknen der zweiten und der dritten Schicht werden diese Schichten zusammen gesintert. Der Titandioxid-Dickfilm 4 wird in der Weise hergestellt, dass er eine Dicke etwa zwischen 50 und 100 µm aufweist. Auf die vorstehend genannten Schichten wird dann mittels Plasmasprühen die Schutzschicht 5 aufgebracht. Um eine gute mechanische Festigkeit zu erreichen, ist die Kontaktfläche zwischen der Schutzschicht 5 und der Platinelektrodenanordnung 2 relativ gross.

In der in Fig. 1 dargestellten Ausführungsform, in der die Platinelektroden dünn und ihre Querschnittsfläche klein ist, ist zur Reduzierung des Gesamtwiderstandes des Sauerstoffsensors zwischen den Elektroden ein Zwischenraum mit einer möglichst grossen Gesamtlänge und einer möglichst kleinen Breite vorgesehen, wobei die Breite etwa 100 µm beträgt.

In Fig. 2 ist eine weitere Ausführungsform des erfindungsgemässen Sauerstoffsensors dargestellt. Hierbei dient eine lange zylindrische keramische Stange 1 als Substrat für die Dickfilme, die auf die zylindrische Oberfläche gedruckt werden. In Fig. 2 sind gleiche Teile mit den gleichen Bezugsziffern bezeichnet wie in Fig. 1. Bei der Ausführungsform des Sensors nach Fig. 2 weist die Platinelektrode ebenso wie bei der Ausführungsform nach Fig. 1 zum Teil zwei Schichten auf.

Fig. 3 zeigt beispielhaft eine für die Praxis vorgesehene Ausführungsform des erfindungsgemässen Sauerstoffsensors. Ein Sensorelement 6 ist dabei in einem Gehäuse 7 angeordnet und auf dem Boden des Gehäuses befestigt, das mit einer der Platinelektroden in Berührung steht. Die andere Elektrode ist mit einem stabförmigen Leiter 9 kontaktiert, der etwa in der Gehäusemitte angeordnet ist. Das Abgas gelangt durch Öffnungen 8 an die Oberfläche des Sensors 6. Bei einem Aufbau entsprechend Fig. 2 entfällt die stabförmige Verbindungsleitung, da ein derartiges leitendes Verbindungsglied ebenfalls als Dickfilm ausgebildet ist.

Fig. 4 zeigt eine praxisgerechte Ausführungsform des Sensorelementes nach Fig. 2. Das Sensorelement 11 ist in einem Gehäuse 12 angeordnet und zwischen einem unteren Kontaktanschluss 13 und einem oberen Kontaktanschluss 14 befestigt, wobei es mit den Anschlüssen durch den von einer Feder 15 ausgeübten Druck in Kontakt gehalten wird. Die kontaktierenden Bereiche der Anschlüsse 13 und 14 befinden sich in den oberen und unteren, das Element umschliessenden Enden, so dass die Kontaktbereiche mit dem durch Öffnungen 16 eintretenden Abgas nur sehr wenig in direkte Berührung kommen.

Fig. 5 zeigt beispielhaft die Ansprechcharakteristik eines erfindungsgemässen Titandioxid-Sauerstoffsensors, bezogen auf die Änderung des Luft/Brennstoff-Verhältnisses bei einem zugehörigen Motor. Im allgemeinen ist ein Luft/Brennstoff-Massenverhältnis von 14,6 erwünscht, um im Oxidations-Reduktions-Verhalten eines 3-Weg-Katalysators die beste Wirkung zu erzielen. Ein Sauerstoffsensor dient deshalb zur Rückführung der Information, um eine Anpassung des Luft/Brennstoff-Verhältnisses an den Wert von ca. 14,6 zu erreichen. Gewöhnlich liegt die Abgastemperatur von Automobilen innerhalb eines Bereiches von etwa 350 bis 900°C, wobei das genannte Rückführungsverhalten bei Abgastemperaturen im Bereich etwa zwischen 350 und 700°C erforderlich ist. Es ist deshalb erwünscht, dass sich der elektrische Widerstand des Sauerstoffsensors bei Abgastemperaturen im Bereich etwa zwischen 350 und 700°C bei einem Wert des Luft/Brennstoff-Verhältnisses von etwa 14,6 schnell ändert. Fig. 5 zeigt, dass diese Forderung beim erfindungsgemässen Sauerstoffsensor in zufriedenstellender Weise erfüllt wird.

Beim praktischen Einsatz von Sauerstoffsensoren in Kraftfahrzeugen ist – in Fällen, wo am Sensor sich schnell wiederholende Änderungen des Luft/Brennstoff-Verhältnisses von der fetten zur mageren Seite und umgekehrt erfolgen – ferner eine schnelle Abgabe des Rückführungssignals in Abhängigkeit von qualitativen Änderungen im Abgas, d.h. eine schnelle Ansprechzeit, von Bedeutung. Der Titandioxid-Sauerstoffsensor nach der vorliegenden Erfindung hat in der Sensorausgangsfrequenz eine Ansprechzeit entsprechend einer Frequenz von 2 Hz oder mehr, und zwar bei einer Temperatur im Bereich etwa zwischen 350 und 700°C, bei einem Sensorwiderstand von 330 Ω, bei einer Gasströmungsgeschwindigkeit von 3,0 l/min und bei Abweichungen im Luft/Brennstoff-Verhältnis von der stöchiometrischen Zusammensetzung um einen Wert zwischen 0,5 und 1,5. Diese Ansprechcharakteristik ist mehr als 2mal so schnell wie diejenige konventioneller Sensoren.

Obwohl bei den vorstehend erläuterten Ausführungsformen des erfindungsgemässen Sauerstoffsensors Titandioxid als Übergangsmetalloxid verwendet wird, betrifft die Erfindung gleichermassen Sauerstoffsensoren mit anderen Übergangsmetalloxiden, beispielsweise Kobaltoxid. Ferner können in den genannten Ausführungsformen die Platinelektroden – anstatt durch Drucken – nach anderen Methoden hergestellt werden, beispielsweise durch Sputtern oder Ionenplattierung (Ionenbeschichtung); darüber hinaus können als Elektrodenmaterialien andere Metalle als Platin verwendet werden.

Beim erfindungsgemässen Sauerstoffsensor sind sowohl das Widerstandselement als auch die Elektroden als Dickfilme ausgebildet, wobei minimierte Mengen an Materialien eingesetzt werden. Auf diese Weise ergeben sich neben einer ausreichenden mechanischen Festigkeit, einer für praktische Zwecke zufriedenstellenden Haltbarkeit und einem verbesserten Ansprechverhalten auch minimierte Material- und Herstellungskosten.

**Patentansprüche**

1. Sauerstoffsensor zur Bestimmung der Änderung des Sauerstoffpartialdruckes in einem den Sensor umgebenden Gas aufgrund einer Änderung des Widerstandes eines Übergangsmetalloxides mit einem Messelement aus dem Übergangsmetalloxid und zwei mit dem Messelement in Berührung stehenden Metallelektroden, wobei das Übergangsmetalloxid und die Metallelektroden auf einem keramischen Substrat angeordnet sind und auf dem Übergangsmetalloxid und den Metallelektroden eine keramische Schutzschicht in der Weise angeordnet ist, dass die freie Oberfläche des Messelementes vollständig und die freie Oberfläche des Metallelektroden wenigstens teilweise bedeckt ist, dadurch gekennzeichnet, dass das Messelement aus einem porösen Dickfilm des Übergangsmetalloxides mit einer Dicke zwischen etwa 50 und 100 μm besteht, an dem zwei Dickfilm-Metallelektroden angeordnet sind, dass eine der beiden Metallelektroden eine auf dem keramischen Substrat angeordnete erste Schicht eines Elektrodendickfilmes und eine auf der ersten Schicht und dem Übergangsmetalloxid-Dickfilm angeordnete zweite Schicht umfasst und dass die zweite Schicht des Elektrodendickfilmes sowohl die Oberfläche des Übergangsmetalloxid-Dickfilmes als auch die Oberfläche der ersten Schicht des Elektrodendickfilmes wenigstens teilweise bedeckt.

2. Sauerstoffsensor nach Anspruch 1, dadurch gekennzeichnet, dass das Übergangsmetalloxid Titandioxid ist.

3. Sauerstoffsensor nach Anspruch 1 oder 2, dadurch gekennzeichnet, dass die Metallelektroden aus Platin bestehen.

4. Sauerstoffsensor nach einem der Ansprüche 1 bis 3, dadurch gekennzeichnet, dass die keramische Schutzschicht aus Magnesiumspinell besteht.

5. Sauerstoffsensor nach einem oder mehreren der Ansprüche 1 bis 4, dadurch gekennzeichnet, dass das keramische Substrat die Form einer zylindrischen Stange aufweist.

6. Sauerstoffsensor nach einem oder mehreren der Ansprüche 1 bis 5, dadurch gekennzeichnet, dass die keramische Schutzschicht durch Aufsprühen von geschmolzenem Material hergestellt ist.

7. Sauerstoffsensor nach einem oder mehreren der Ansprüche 1 bis 6, dadurch gekennzeichnet, dass der Übergangsmetalloxid-Dickfilm und die Dickfilm-Metallelektroden durch Sintern im Anschluss an einen Siebdruckprozess von Pasten pulverförmiger Materialien hergestellt sind.

8. Sauerstoffsensor nach einem oder mehreren der Ansprüche 1 bis 7, dadurch gekennzeichnet, dass die zweite Schicht des Elektrodendickfilmes und der Übergangsmetalloxid-Dickfilm zusammen gesintert sind.

## Claims

1. An oxygen sensor for determining the change in the oxygen partial pressure in a gas which surrounds the sensor, based on a change in the resistance of a transition metal oxide, said sensor comprising a measuring element made of the transition metal oxide, and two metal electrodes which are in contact with the measuring element, the transition metal oxide and the metal electrodes being arranged on a ceramic substrate and a ceramic protective layer being arranged on the transition metal oxide in such a way that the exposed surface of the measuring element is completely covered and the exposed surface of the metal electrodes is at least partially covered, characterized in that the measuring element consists of a porous thick film of the transition metal oxide having a thickness of between about 50 and 100 μm, on which measuring element there are arranged two thick film metal electrodes; that one of the two metal electrodes comprises a first layer of an electrode thick film which is arranged on the ceramic substrate and a second layer which is arranged on the first layer and the transition metal oxide thick film; and that the second layer of the electrode thick film at least partially covers both the surface of the transition metal oxide thick film and the surface of the first layer of the electrode thick film.

2. An oxygen sensor according to Claim 1, characterized in that the transition metal oxide is titanium dioxide.

3. An oxygen sensor according to Claim 1 or Claim 2, characterized in that the metal electrodes consist of platinum.

4. An oxygen sensor according to one of Claim 1 to 3, characterized in that the ceramic protective layer consists of magnesium spinel.

5. An oxygen sensor according to one or more of Claims 1 to 4, characterized in that the ceramic substrate has the form of a cylindrical rod.

6. An oxygen sensor according to one or more of Claims 1 to 5, characterized in that the ceramic protective layer is produced by spraying molten material.

7. An oxygen sensor according to one or more of Claims 1 to 6, characterized in that the transition metal oxide thick film and the thick film metal electrodes are produced by sintering, in connection with a silk screen process, of pastes of powdered materials.

8. An oxygen sensor according to one or more of Claims 1 to 7, characterized in that the second layer of the electrode thick film and the transition metal oxide thick film are sintered together.

## Revendications

1. Détecteur d'oxygène pour la détermination de la modification de la pression partielle d'oxygène dans un gaz entourant le détecteur sur la base d'une modification de la résistance d'un oxyde métallique de transition, comprenant un élément de mesure en l'oxyde métallique de transition et deux électrodes métalliques en contact avec l'élément de mesure, l'oxyde métallique de transition et les électrodes métalliques étant disposés sur un substrat en céramique et une couche de protection en céramique étant disposée sur l'oxyde métallique de transition et sur les électrodes métalliques de manière à recouvrir entièrement la surface libre de l'élément de mesure et au moins partiellement la surface libre des électrodes métalliques, caractérisé en ce que l'élément de mesure est constitué d'une pellicule poreuse épaisse de l'oxyde métallique de transition, qui a une épaisseur comprise entre 50 et 100 microns environ et sur laquelle sont disposées deux électrodes métalliques sous forme de pellicule épaisse, en ce que l'une des deux électrodes métalliques comprend une première couche d'une pellicule épaisse formant électrodes disposée sur le substrat en céramique et une seconde couche disposée sur la première couche et sur la pellicule épaisse en oxyde métallique de transition et en ce que la seconde couche de la pellicule épaisse formant électrodes recouvre au moins partiellement aussi bien la surface de la pellicule épaisse en oxyde de métal de transition que la surface de la première couche épaisse formant électrodes.

2. Détecteur d'oxygène selon la revendication 1, caractérisé en ce que l'oxyde métallique de transition est du bioxyde de titane.

3. Détecteur d'oxygène selon la revendication 1 ou 2, caractérisé en ce que les électrodes métalliques sont en platine.

4. Détecteur d'oxygène suivant l'une des revendications 1 à 3, caractérisé en ce que la couche de protection en céramique est en spinelle de magnésium.

5. Détecteur de spinelle suivant l'une ou plusieurs des revendications 1 à 4, caractérisé en ce que le substrat céramique présente la forme d'un barreau cylindrique.

6. Détecteur d'oxygène suivant une ou plusieurs des revendications 1 à 5, caractérisé en ce que la couche de protection céramique est préparée par projection de matière fondue.

7. Détecteur d'oxygène suivant l'une ou plusieurs revendications 1 à 6, caractérisé en ce que la pellicule épaisse d'oxyde de métal de transition et les électrodes métalliques formées de pellicule épaisse sont préparées par frittage à la suite d'un processus de sérigraphie de pâte de matériau pulvérulent.

8. Détecteur d'oxygène suivant une ou plusieurs des revendications 1 à 7, caractérisé en ce que la deuxième couche de la pellicule épaisse formant électrodes et la pellicule épaisse d'oxyde de métal de transition sont frittées ensembles.

FIG 3

FIG 2

FIG 1

FIG 4

FIG 5

Widerstand [kΩ]

$10^4$

$10^3$

$10^2$

$10^1$

$10^0$

$10^{-1}$

$10^{-2}$

350°C

500°C

700°C

fetter Bereich

magerer Bereich

14.6

Luft/Brennstoff-Verhältnis